(19) Europäisches Patentamt
European Patent Office
Office européen des brevets

(11) **EP 4 166 315 A1**

(12) **EUROPEAN PATENT APPLICATION**

(43) Date of publication:
**19.04.2023 Bulletin 2023/16**

(21) Application number: **22195925.7**

(22) Date of filing: **15.09.2022**

(51) International Patent Classification (IPC):
***B32B 5/02*** *(2006.01)*   ***B32B 5/18*** *(2006.01)*
***B32B 5/24*** *(2006.01)*   ***B32B 7/12*** *(2006.01)*
***A62B 17/00*** *(2006.01)*

(52) Cooperative Patent Classification (CPC):
**B32B 5/024; A62B 17/003; B32B 5/18;
B32B 5/245; B32B 7/12;** B32B 2250/40;
B32B 2262/0284; B32B 2266/0235;
B32B 2266/104; B32B 2307/3065; B32B 2307/724;
B32B 2437/00; B32B 2571/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2021  GB 202114797
25.08.2022  PCT/GB2022/052185**

(71) Applicants:
• **Robertson, Barry
  Didcot OX11 7WB (GB)**
• **Robertson, Stuart
  Didcot OX11 7WB (GB)**

(72) Inventor: **ROBERTSON, Barry
  Didcot, OX11 7WB (GB)**

(74) Representative: **Lucas, Phillip Brian
  Lucas & Co.
  135 Westhall Road
  Warlingham, Surrey CR6 9HJ (GB)**

(54) **A GARMENT AND A COMPOSITE FABRIC FOR USE IN HAZARDOUS ENVIRONMENTS**

(57)    A base layer comprising or made from a composite fabric comprising a breathable membrane layer (101) having a multiplicity of micropores, the breathable membrane having an inner and outer surfaces, and an inner fabric layer (102) laminated to said inner surface of said breathable membrane and an outer fabric layer (103) laminated to said outer surface of said breathable membrane, the base layer for use in hazardous environments, such as smoky environments.

**FIG. 1**

EP 4 166 315 A1

**FIG. 2**

**Description**

BACKGROUND

The present invention relates to a garment and a composite fabric for use in hazardous environments, such as smoky environments and particularly, but not exclusively to a base layer for use in smoky environments. The present invention also relates to a method of making a composite fabric and garment.

Many workers are subject to fire and smoke emanating therefrom in their working environments, such as fire fighters, forestry workers, oilrig workers, tradesman, engineers, scientists and geologists working near volcanoes, reactors, furnaces and the like.

Firefighters are provided with outer garments which endeavour to protect their skin from heat emanating from the fire and from flames spreading through their workwear. This may be achieved by having an outer garment with at least one layer which has a high ignition temperature to inhibit catching on fire and a reflective layer to repel heat and inhibit spread of flames. The outer garment is spaced from the body to trap air which insulates the worker's skin from the heat. Such air may be trapped within a fibrous layer, such as wool and also be loose fitting to provide further insulation and allow limited circulation of air close to the skin of the firefighter *inter alia* to allow sweat to flow from the skin.

The outer garment may comprise a jacket, trousers and flash hood. The flash hood may comprise a separate inner balaclava and an outer hood. Normal clothes and underwear may be worn underneath such outer garments.

A firefighter may have an increased risk of developing cancer over a worker in other general occupations.

SUMMARY AND STATEMENTS OF INVENTION

The inventors have observed that firefighters have areas of skin exposed to the environment when fighting fires and areas of skin exposed to smoky air circulating between the firefighter's skin and garments. The inventors have observed that this exposed skin is likely to be blackened by airborne particles within smoke landing on the skin. The inventors have observed that a firefighter's skin emits an odour after being exposed to smoke when fighting or being in the vicinity of a fire, often taking two or three showers with soap to reduce the odour to an unnoticeable level. The inventors have noted that the odour is an indication that particles, which may potentially be carcinogens, are present on or settled within pores of the skin.

When body temperature increases, pores in the skin tend to open allowing absorption of the carcinogens into the body. The size of the opening of each pore in the skin may increase in size when under stress due to an increase in heat. Furthermore, the chance of carcinogens being absorbed into the skin increases. The inventors have observed that particles in smoke are more likely to lodge in the pores in skin subject to heat-stress. The inventors have observed that it is thus important to reduce the likelihood of heat-stress occurring.

The inventors have also noted that a firefighter's body may suffer from heat-stress, a condition which occurs when body temperature increases and decreases rapidly. Firefighters tend to work in short stints during a shift. A sudden change in temperature occurs when entering and exiting a firefighting zone for each stint. When entering, the firefighting zone, the firefighter is subject to a sudden increase in temperature which tends to induce a sudden and prolific sweat, wetting clothing. When the firefighter exits the firefighting zone, the firefighter is subject to a sudden decrease in ambient temperature, made worse by body heat conducting rapidly away from the skin into the wetted clothing. The inventor has observed the chance of carcinogens being absorbed into the skin increases when a firefighter is subject to heat-stress. The inventor has observed that it is important to maintain a consistent body temperature throughout each stint.

It has also been observed that emergency service personnel and other workers are subject to hazardous material, such as dust and ash resulting from fires and the like. The base layer of the invention is suitable for reducing such hazardous materials reaching the skin of such a worker.

In accordance with the present invention, there is provided a base layer for use in hazardous environments, such as smoky environments, the base layer comprising a composite fabric comprising a breathable membrane layer having a multiplicity of pores, which may be micropores, and a breathable fire-retardant fabric layer having a multiplicity of openings, the breathable membrane layer laminated on at least one side to the breathable fire-retardant fabric layer with an adhesive.

In accordance with a second aspect of the invention, there is provided an outer garment for use in hazardous environments, such as smoky environments, the outer garment comprising a composite fabric comprising a breathable membrane layer having a multiplicity of pores and a breathable fire-retardant fabric layer having a multiplicity of openings, the breathable membrane layer laminated on at least one side to the breathable fire-retardant fabric layer with an adhesive. The outer garment may comprise a known fire jacket and fire trousers lined with a composite fabric of the invention, preferably with a link or overlap between the jacket and trousers to provide a continuous composite fabric of the invention therebetween to inhibit smoke from getting to the skin of the user, without having to pass through and be filtered by the composite fabric. Optionally, the base layer may be an all-in-one, incorporating leggings with a top and a sealed entrance hatch. Optionally, a fire suit may be lined with the composite fabric of the invention. Optionally, a fire suit jacket is lined with the composite fabric of the invention. Optionally, salopettes is lined with the composite fabric of the invention. Optionally, a flash hood is lined with the composite fabric of the invention.

Optionally, the membrane comprises a Poly Tetra Fluoro Ethylene (PTFE). Optionally, the membrane comprises an expanded polytetrafluoroethylene (ePTFE). Optionally, the membrane comprises at least one of: Poly Tetra Fluoro Ethylene (PTFE); expanded polytetrafluoroethylene (ePTFE), polyvinyl chloride (PVC); polyurethane (PU); polyamide polyester; or a blend thereof. The membrane incorporates pores or micropores to allow moisture to pass through the membrane. The membrane may be coated. The coating may be a

The composite material of the invention is light weight and flexible, which does not significantly affect body movement.

In accordance with a third aspect of the invention, there is provided a balaclava or fire-hood for use in hazardous environments, such as smoky environments, the balaclava or fire-hood comprising a composite fabric comprising a breathable membrane layer having a multiplicity of pores and a breathable fire-retardant fabric layer having a multiplicity of openings, the breathable membrane layer laminated on at least one side to the breathable fire-retardant fabric layer with an adhesive.

A base layer is generally regarded as a garment worn as an under garment, the majority of which is covered by an outer garment and thus the majority of the base layer is not open to the elements. Small portions of the base layer may be exposed to the elements, particularly around the neck, wrists and ankles.

The invention also provides a composite fabric comprising a breathable membrane layer having a multiplicity of pores and a breathable fire-retardant fabric layer having a multiplicity of openings, the breathable membrane layer laminated on at least one side to the breathable fire-retardant fabric layer with an adhesive.

Optionally, the adhesive is a hotmelt polyurethane. Optionally, the adhesive is a moisture curing hotmelt polyurethane.

Optionally, the breathable membrane layer is hydrophilic. Optionally, the breathable fabric material is non-hydrophilic. Optionally, the breathable membrane comprises pores sized to inhibit ingress of the majority of particles found in smoke. Size range of smoke particles and pore sizes. Optionally, the breathable membrane comprises pores sized to inhibit ingress of at least 99% of particles found in smoke. Optionally, the breathable membrane comprises pores sized to allow egress of sweat and moisture, such pores may be micropores. Size range of sweat and moisture pores (problem: result to be achieved). Optionally, the breathable membrane is fire-retardant [how - examples of materials; example of material which is sufficiently breathable]. Optionally, the breathable membrane is made from a polymer. Optionally, the breathable membrane is a polymer film.

Optionally, the breathable fire-retardant fabric layer comprises openings which are significantly larger the pores in the breathable membrane. Optionally, the openings have an opening which are at least ten times the size of openings of the pores and optionally between ten and a hundred times and optionally between two and ten times. Optionally, the openings are formed between woven yarn, the woven yarn optionally comprising warp yarn and a weft yarn. Optionally, the yarn is made from polyester filaments. Optionally, the polyester filaments are discontinuous and may be short polyester fibres. Optionally, the yarn or filaments are coated in a fire-retardant coating. Optionally, the fire-retardant coating is one of : a Toray™ fire-retardant; a fire-resistant epoxy; or polyolefin resin composition.

Optionally, the breathable fire-retardant fabric layer is on an outer side of the breathable membrane layer. Optionally, on the side subjected to heat. Optionally, the base layer is worn under a fireman's jacket and salopettes.

Optionally, the composite fabric comprises a breathable fabric layer laminated with an adhesive to an opposing side of the breathable membrane layer. Optionally, the breathable fabric layer is fire-retardant.

Optionally, the breathable membrane layer and the breathable fire-retardant fabric layer each have an elasticity, the elasticity of each being substantially equal. Optionally, within 25% of the same elasticity and optionally, within 10% of the same elasticity. Optionally, the breathable fabric layer has an elasticity which is substantially equal to the elasticity of the breathable membrane layer and the breathable fire-retardant fabric layer. Optionally, the elasticity of the breathable membrane layer is within ten percent of the elasticity of the breathable fire-retardant layer.

Optionally, the base layer comprises a base layer top and base layer leggings. Optionally, the base layer top comprises a portion which covers the torso and sleeves, optionally, the sleeves are over-length to cover a portion of the hands and a thumb opening provided. Optionally, the base layer leggings comprise a waist portion provided with an elastic waist band and elasticated ankle portions. Optionally, the base layer comprises seam stitching with fire-retardant thread. Optionally, the top is worn tucked into the elasticated waist band or belt portion of the leggings. Optionally, the elasticated waist band is sewn into the waist. Optionally, an inner surface of the elasticated belt portion is tacky to inhibit the top from slipping out of the leggings. The inner surface may be rubberised or have a tacky surface applied thereto.

Optionally, the composite fabric is elasticated so that the base layer fits snuggly against the skin, providing a minimal or no space for air to circulate.

The present invention also provides method of making a composite fabric for use as a garment, the method comprising the steps of unfurling a breathable fire-retardant fabric from a roll of breathable fire-retardant fabric, applying with an engraved roller an amount of adhesive to the fire-retardant fabric, unfurling a breathable membrane from a roll of breathable membrane and passing the fire-retardant fabric with adhesive thereon and breathable membrane through a nip between two rollers to laminate the fire-retardant fabric and breathable membrane to form a composite fabric. Optionally, the layers are tensioned to planar, so that there are no or minimal creases in the resulting composite fabric.

The present invention also provides a composite fabric comprising a breathable membrane layer having a multiplicity of micropores, the breathable membrane having an inner and outer surfaces, and an inner fabric layer laminated to said inner surface of said breathable membrane and an outer fabric layer laminated to said outer surface of said breathable membrane.

Optionally, the inner fabric material comprises a woven yarn comprising polyester filaments, optionally, the polyester filaments are discontinuous and may be short polyester fibres and optionally, the yarn or filaments are coated in a fire-retardant coating. Optionally, the outer layer comprises a woven yarn comprising polyester filaments, optionally, the polyester filaments are discontinuous and may be short polyester fibres and optionally, the yarn or filaments are coated in a fire-retardant coating.

Optionally, the breathable membrane layer is a sheet material with said micropores formed therein. Optionally, the breathable membrane layer comprises a polymer. Optionally, the breathable membrane layer is between 10 and $50\mu$ (0.01-0.05mm) and may be between 20 and $30\mu$ (0.02-0.03mm) and may be $25\mu$ (0.025mm). Optionally, the breathable membrane layer has a water vapour transmissibility of between 100 and 1000 $(g/m^2/24hr)$ and may be of between 400 and 800 $(g/m^2/24hr)$ and may be of between 500 and 650 $(g/m^2/24hr)$. Optionally, the breathable membrane layer has a 25% elongation when subjected to between 0.3 and 1 N/cm optionally between 0.5 and 0.8 N/cm and optionally 0.6 to 0.7 N/cm. Optionally, the breathable membrane layer has a tensile strength of between 2 and 6 (N/cm), optionally 3 to 5(N/cm) and optionally, 3.5 to 4 (N/cm).

The present invention also provides a base layer comprising the composite fabric of the invention. Optionally, the base layer is made substantially entirely from composite fabric of the invention, further comprising stitching with fire resistant thread. Optionally, the base layer further comprises elasticated portions, optionally about a waist portion and optionally about an ankle portion and optionally about a neck portion.

The inventor believes a firefighter wearing a base layer in accordance with the present invention has reduced areas of skin exposed to smoky environments; the skin underneath the base layer is not discoloured and the skin no longer smells of, nor emits an odour of smoke. The inventor believes that a firefighter wearing a base layer of the invention will have shorter periods of heat-stress or less likely to suffer from heat-stress. The inventor believes that a firefighter wearing a base layer of the invention is likely to have a more consistent skin temperature, maintaining skin temperature at a normal level.

BRIEF DESCRIPTION OF THE DRAWINGS

For a better understanding of the present invention reference will now be made, by way of example only, to the accompanying drawings, in which:

Figure 1 shows a base layer worn by a firefighter, the base layer in accordance with the present invention made from a composite fabric in accordance with the present invention, the base layer comprising base layer leggings and a base layer top;
Figure 1A is enlarged perspective view of the leggings shown in Figure 1;
Figure 1B is an enlarged view of the base layer top shown in Figure 1, as viewed from in front and to the right;
Figure 1C is an enlarged view of the base layer top shown in Figure 1, as viewed from in rear and to the right;
Figure 2 is an enlarged scrap schematic end view of the composite fabric of the present invention used in the base layer shown in Figure 1;
Figure 3A is a perspective view of a piece of fabric used in an outer layer of the composite fabric shown in Figure 2;
Figure 3B is an enlarged view of the piece of fabric shown in Figure 3A, together with a 1cm scale with divisions of 5mm, 1mm and 0.5mm; Figure 3C is a perspective view of the composite fabric used in the base layer shown in Figure 1;
Figure 3D is an enlarged view of a piece of fabric used in an inner layer of the shown in Figure 2, together with a 1cm scale with divisions of 5mm, 1mm and 0.5mm;
Figure 3E is a cross sectional view of the composite fabric of the invention;
Figure 4 is a top plan view of a membrane used in the composite fabric;
Figure 4A is a view of the composite fabric shown in Figure 2, in use, the schematic view showing ends of discontinuous fibres;
Figure 5A is a schematic view of an apparatus used in a method of making the composite fabric in a first stage of operation;
Figure 5B is a schematic view of the apparatus shown in Figure 5A in a second stage of operation;

Figure 6 shows a surface of an engraved roller of the apparatus of Figures 5A and 5B;
Figure 7A is a side view of an apparatus used in a method of making the composite fabric, with some hidden parts shown; and
Figure 7B is a front of the apparatus shown in Figure 7A.

DETAILED DESCRIPTION

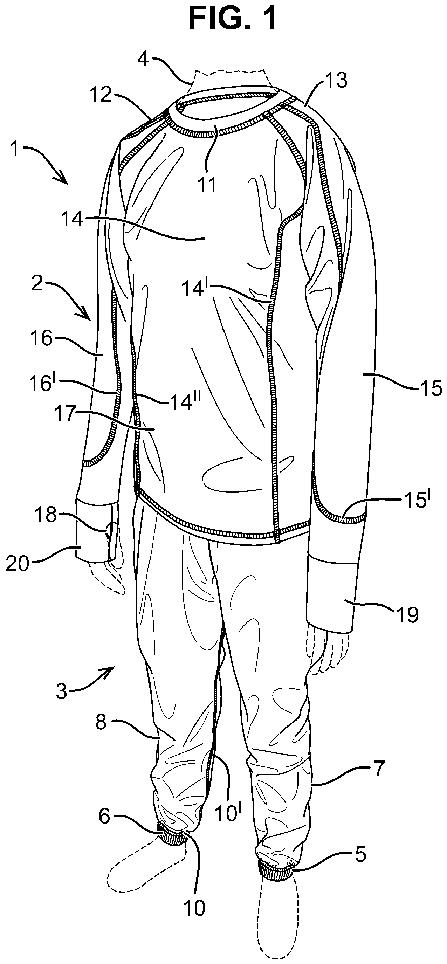

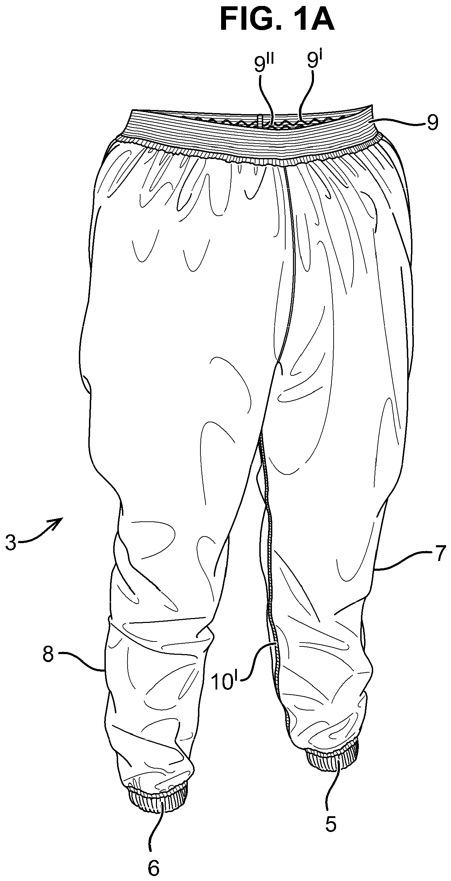

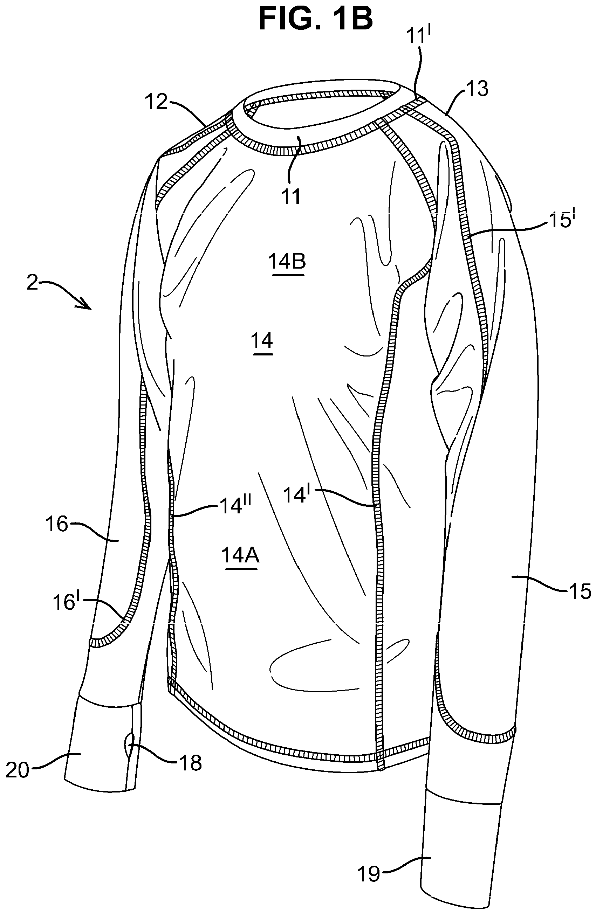

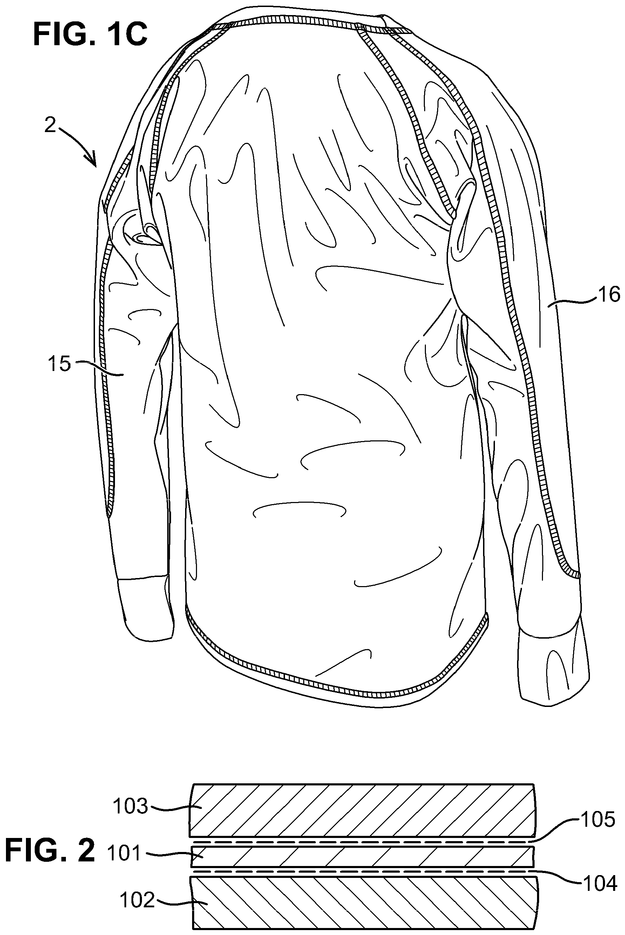

Referring to Figure 1 there is shown a base layer in accordance with the present invention, generally identified by reference numeral 1. The base layer 1 comprises a base layer top 2 for covering a torso, arms and a portion of the hands of a firefighter 4 and base layer leggings 3 for covering the bottom part of the torso and legs of the firefighter 4. The base layer 1 covers a major portion of the body of the firefighter 4.

The base layer leggings 3 has annular elasticated portions 5 and 6 at a lower end of each leg portion 7 and 8. The annular elasticated portions may provide a tight fit around the ankles which may inhibit smoke from rising and passing between the skin and the base layer leggings. It should be noted that above the elasticated portions 5 and 6, there is either a small annular gap between the base layer bottoms and the skin or no gap between the base layer bottoms and the skin. A small annular gap may provide additional insulation and improved circulation of air over the skin, reducing the possibility of heat-stress. A small gap may be regarded as a continuous annulus of less than 25mm and optionally less than 15mm around the circumference of the leg. The base layer leggings 3 are provided with a high waist with an elasticated waist band 9, with a pair of spaced annular neoprene sealing bands 9' and 9". In use, the base layer top 2 is tucked in between the torso and elasticated waist band 9 of the base layer leggings 3. The double neoprene seal seals against the base layer top to *inter alia* inhibit an entrance for smoke to pass between the skin and the base layer and to inhibit creating a continuous chimney like flow path along which would facilitate flow of smoke between the base layer and the skin. A line of stitching 10' is provided along an inner side of leg potions 7 and 8 and meet at a crotch. The stitching 10' facilitate providing a consistent annular gap between the legs of the firefighter and the composite fabric. The stitching 9' may form a ladder pattern, a series of H shapes to facilitate the shape of the leggings 3.

The base layer top 2 has a collar 11 and shoulder portions 12 and 13, chest portion 14, over length sleeves 15 and 16. The base layer top 2 hangs over the shoulders and chest and loosely fits around the waist and arms. No gap between the base layer top 2 and the skin is provided over the shoulder and chest. A small annular gap may provide additional insulation from excessive ambient heat and improve circulation of air over the skin around the waist region of the torso 17 and around the arms, reducing the possibility of heat-stress. A small gap may be regarded as less than a continuous annulus of 25mm and optionally less than 15mm around the circumference of the waist and arms. A line of stitching 11' is provided substantially concentric with the collar 11. The stitching 10' may facilitate providing a flat contact area with a neckline of the firefighter 4. The stitching 10' may increase the rigidity of the composite fabric in the area about the neck. A line of stitching 14' and 14" runs down each frontside of the base layer top 2 which may facilitate a contact fit with the shoulder and upper chest area 14B of the firefighter 4 and a loose fit area 14A over the stomach area. The loose fit area may provide a consistent gap around the stomach area and may provide a consistent gap around the lower back area and may provide a consistent annular gap about the lower torso of the firefighter. The stitching 11', 14' and 14" may form a ladder pattern, a series of H shapes to facilitate the shape of the leggings 3.

A line of stitching 15' and 16' is provided substantially along a substantially portion of respective sleeves 15 and 16. The lines of stitching 15' and 16' may facilitate providing a flat contact area about the shoulder of the firefighter 4. The lines of stitching 15' and 16' may increase the rigidity of the composite fabric in the area about the neck. The over length portions 19 and 20 of the sleeves 15 and 16 comprise thumb holes 18 provide protection over palms and backs of the hands. The over length portions 19 and 20 may also provide a tortuous path for any smoke contaminated air to pass between the hands and the sleeves 15 and 16 of the base layer top 2. Each base layer may be tailored to each individual firefighter 4.

The base layer 1 is made from a composite fabric 100 shown in Figure 2. The composite fabric 100 comprises three layers: a breathable membrane layer 101 sandwiched between an inner fabric layer 102 and outer fabric layer 103. The inner fabric layer 102 is laminated to a first side of the breathable membrane layer 101 with a polyurethane 104. The outer fabric layer 103 is laminated to an opposing side of the breathable membrane layer 101 with a polyurethane 105. The composite fabric 100 may have elastic properties to allow the firefighter to move in an agile fashion whilst providing a close fit, providing a small gap or be tight against the skin of the firefighter. Alternatively, the base layer has very limited elastic properties to maintain consistent breathability characteristics. In the latter case, it may be preferred to have each base layer tailored to each firefighter.

During manufacture, the composite fabric 100 is cut to a pattern using conventional techniques, such as scissors or punches and machine sewn along seams using a fire-resistant thread 10.

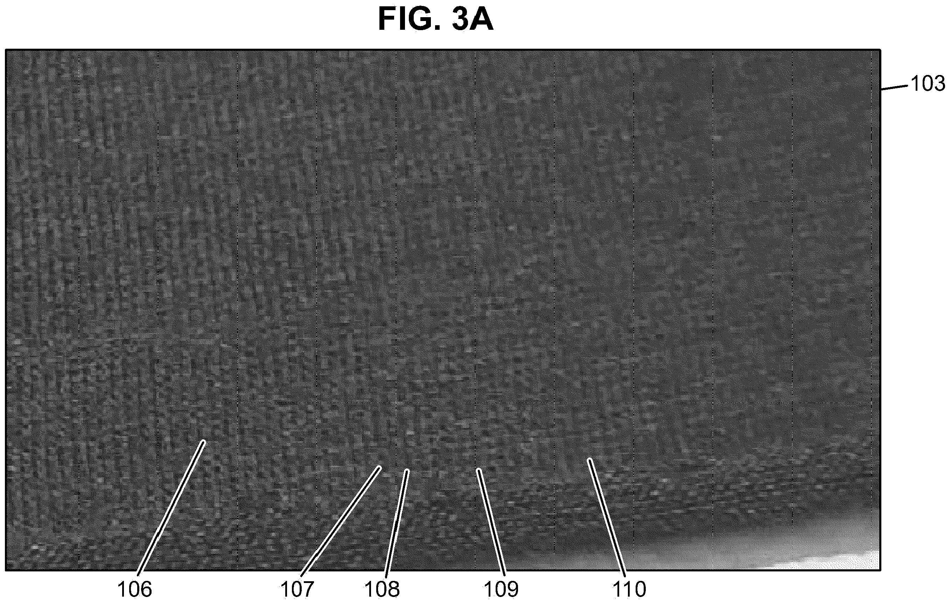

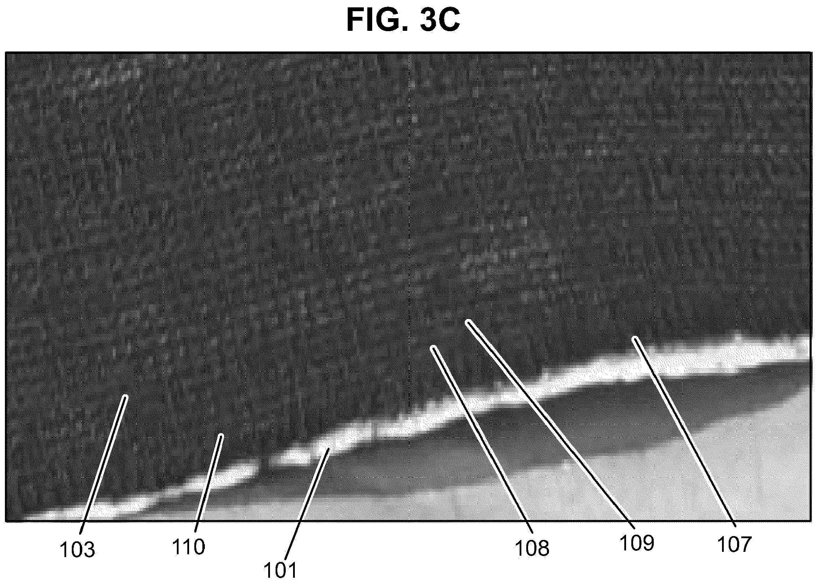

The inner and outer fabric layers 102 and 103 may be of the same fabric, which also preferably has similar elasticity characteristics to the breathable membrane 101. Thus, the elasticity of the inner and outer layers is identical, which may help maintain a bond with the breathable membrane 101. A piece of fabric 106 is shown in Figure 3A which may be used for the inner and outer fabric layers 102 and 103.

The fabric 106 may be woven from fire-retardant yarn 107. Optionally, the yarn 107 comprises polyester filaments (optionally 75% to 100% of the filaments are polyester). Optionally, the filaments are discontinuous fibres which are spun into the yarn, optionally using conventional cotton spinning techniques. This may provide a more natural, cotton-like feel. The discontinuous fibres are of random lengths, such as between 20mm and 1000mm. The polyester filaments or the yarn may be coated, injected, impregnated or dipped in a fire-retardant liquid, such as a Toray fire-retardant, a fire-resistant epoxy or polyolefin resin composition or other suitable fire-retardant.

As shown in Figure 3A, the yarn 107 is woven into the fabric 106 and used for the inner and outer fabric layers 102 and 103. The woven fabric 106 comprises a warp 108 and a weft 109, defining openings 110. The warp and weft may be at right-angles to each other, but may be up to 45 degrees to each other. The fabric is preferably between 50gsm (grams per square metre) and 200gsm and optionally between 75 and 125gsm and optionally Jersey 100gsm on a gauge 28 with a yarn numbered Ne (English Cotton Count) of 30. The fabric may alternatively be 90gsm with a yarn number Ne 40 or may have a yarn number between Ne 30 and Ne 40.

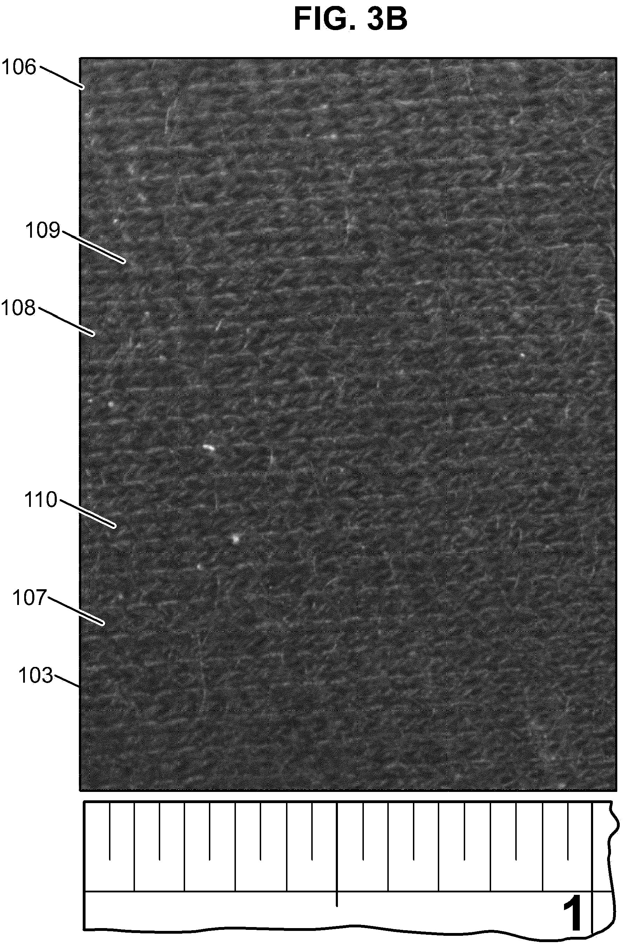

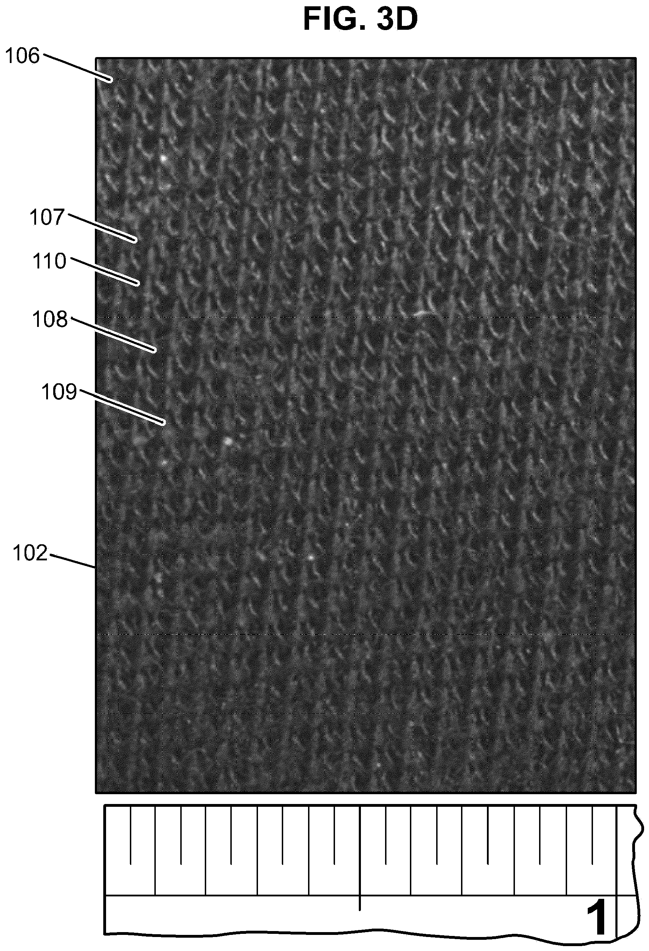

As shown in Figure 3B and 3D, there are approximately thirty threads of warp 108 per 10mm and thirty threads of weft 109 per 10mm. However, it is envisaged that anywhere between ten and one hundred threads of warp 108 per 10mm and weft 109 per 10mm would be sufficient and may between fifteen and fifty threads of warp 108 per 10mm and weft 109 per 10mm would be sufficient and may between thirty and forty threads of warp 108 per 10mm and weft 109 per 10mm would be sufficient.

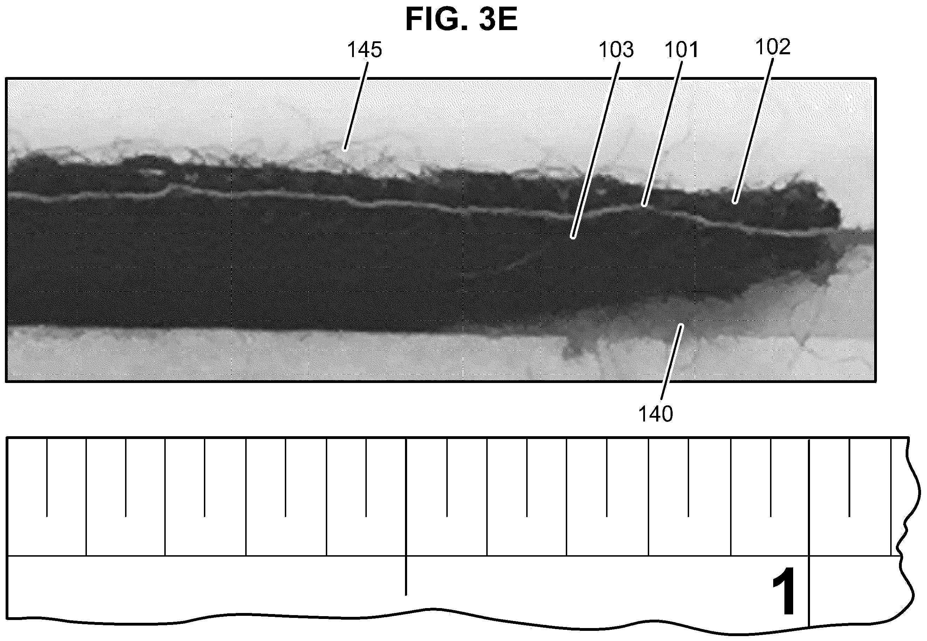

As shown in Figure 3E, the fabric 106 is considerably thicker than the membrane 101. The outer fabric layer 103 may be thicker than the inner fabric layer 102, such as between two and five times thicker and may be between two and three times thicker. This may improve moisture release from the base layer 1. Alternatively, the inner fabric layer 102 may be thicker than the outer fabric layer 103, such as between two and five times thicker and may be between two and three times thicker. This may improve moisture gathering from the skin of the firefighter to the base layer 1. The outer fabric layer 103 may be approximately 1.5mm thick and the inner fabric layer 102 may be approximately 0.5mm thick. Alternatively, the inner fabric layer 102 may be approximately 1.5mm thick and the outer fabric layer 103 may be approximately 0.5mm thick. The membrane 101 may be in the order of 0.1mm thick.

The yarn 106 may have the following characteristics:

TESTING DATA OF FLAME RETARDANT FIBER

| 1.56DTEX/38MM YGN443 | | |
|---|---|---|
| | | |
| 1 | Dry tenacity (Breaking Strength) cN/dtex | 5.39±10% |
| 2 | Dry elongation (Elongation at Break) % | 25.9±10% |
| 3 | Deviation of linear density (Line Density Deviation Rate) % | -1.9±10% |
| 4 | Deviation of length % | -2.4±10% |
| 5 | Content of double-length fibres mg/100g | 0.8±10% |
| 6 | Defects Content mg/100g | 0.5±10% |
| 7 | No. of crimps No./25mm | 10.8±25% |
| 8 | Crimp ratio (Curl Rate) % | 14.7±25% |
| 9 | Shrinkage in 180°C hot air (180°C dry heat shrinkage rate) % | 7.9±10% |
| 10 | Resistivity (Specific Resistance) $\Omega \cdot cm$ | 0.1±100% |

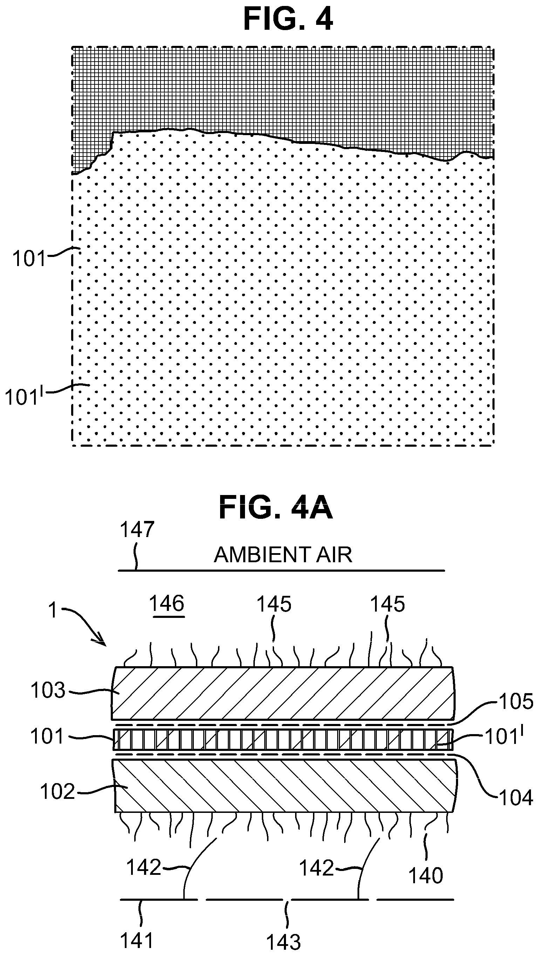

Figure 4 shows the breathable membrane 101, which is a flexible membrane with small pores 101' to inhibit particles generally found in smoke to pass through, but which will allow sweat to pass through. This may be achieved by the breathable membrane 101 being microporous and may be hydrophilic and may be made from a polymer. This may facilitate moisture to pass through the membrane, whilst utilising small pores, which will not allow particles found in smoke to pass across the membrane 101. The membrane may thus act as a filter to inhibit ingress of particles found in smoke whilst allowing egress of moisture from the skin of a firefighter.

| PROPERTY | SPECIFICATION | | | TEST METHOD |
|---|---|---|---|---|
| Thickness (μ) | Range Typical | | 22-28 25 | BS EN ISO 2286-3: 1998 (STM 229) |
| Weight (g/m2) | Range Typical | | 34-42 38 | BS EN ISO 2286-2: 1998 (STM 230) |
| W.V.T. (g/m$^2$/24hr) (Water Vapour Transmission) | Min | | 550±10% | ASTM E96: 95, Procedure B (STM 201) |
| | Typical | | 630±10% | |
| W.V.P. Index (%) (Water Vapour Permeability) | Min Typical | | 74±10% 80±10% | BS 7209:1990 (STM 200) |
| Hydrostatic Head (cm) | Initial | | 700 | BS3424, Part 26: 1990, Method 29A (STM 241) |
| | x3 washes | | 700 | |
| Shrinkage @160°C (%) | L Max | | 2.5 | STM 205 |
| | X Max | | 2.5 | |
| Load @ 25% Elongation (N/cm) | Min | | 0.65±10% | BS ISO 37: 2011 (STM 007) |
| Tensile Strength (N/cm) | Min | | 3.7±10% | BS ISO 37: 2011 (STM 007) |
| Elongation at Break (%) | Min | | 275±10% | BS ISO 37: 2011 (STM 007) |
| Vertical Burn Test | No drip or afterglow | | | FTM Standard 191A, Method 5903-1 (STM 112) |
| | Burn length max: | | 13cm±20% | |
| | Mean: | | 10cm±20% | |
| UV Stability: Retained Tensile Strength (%) and Elongation at Break (%) | Min: | | 50 | STM 116 |

Figure 3B shows a perspective view showing the outer fabric layer 103 laminated to a first side of the breathable membrane 101. An inner fabric layer 102 is optionally laminated to the opposing side of the breathable membrane 101, although this is not shown in this view.

In use, moisture from the skin passes through openings 110 in the inner fabric layer 102, swiftly removing moisture from the skin. The breathable membrane 101 allows moisture to pass through micropores in the hydrophilic membrane 101 and out into the openings 110 in the outer fabric layer 103. Air circulating between the base layer 1 and out garments flows over the openings 110, sucking the moisture therefrom. The openings 110 in the inner and outer fabric layers 102 and 103 are considerably larger than the micropores in the breathable membrane 101.

Referring to Figure 4A, the inner fabric layer 102 may comprise short discontinuous polyester fibres 140. The short discontinuous polymer fibres 140 or the yarn 107 made up of these fibres may act as wicks, so that when the fabric is used as an inner fabric layer 102, sweat from pores 143 is drawn from the skin 141 and hairs 142 on the skin and along and between the short polyester fibres 140. This wicking effect, (which may be similar to capillary action and may utilise surface tension to pull the sweat away from the skin) moves the sweat away from the skin, through openings 110 in the inner layer of fabric 102 to the breathable membrane 101. The pores in the breathable membrane 101 are very small, but the hydrophilic breathable membrane 101 helps draw the water through the membrane. Any particles in the sweat may or may not be drawn through the breathable membrane 101. Movement of the wearer may facilitate movement of the sweat, providing a pumping action by differential movement between adjacent fibres and adjacent yarn 107 in the warp 108 and weft 109. The sweat is then conveyed away from the breathable membrane 101 by the same wicking action in outer fabric layer 103, drawing the sweat away from the breathable membrane 101 along short discontinuous polyester fibres 145. The droplets of sweat on the short discontinuous polyester fibres 145 are drawn off by warm air in the air gap or annulus 146 between the base layer 1 and an outer garment 147 circulates in the gap. The outer surface of the outer fabric layer 103. Warm air in the gap 146 may be warmer than the skin 141 and thus create a pressure differential which may facilitate movement of sweat away from the skin and across the breathable membrane 101.

The breathable membrane 101 may be a single layer of Poly Tetra Fluoro Ethylene (PTFE). Optionally, the breathable membrane 101 is a single layer of an expanded polytetrafluoroethylene (ePTFE) and may form a matrix. The matrix may form openings suitable to allow air and/or moisture to pass across the membrane. Optionally, the breathable membrane 101 comprises at least one of: Poly Tetra Fluoro Ethylene (PTFE); expanded polytetrafluoroethylene (ePTFE), polyvinyl chloride (PVC); polyurethane (PU); polyamide polyester; or a blend thereof. The membrane incorporates pores or micropores to allow moisture to pass through the membrane, which may be formed by the matrix.

The breathable membrane 101 and/or woven fabric layers 102, 103 may be coated. The coating may be a polymer coating. The coating may comprise 15-20%, optionally 16.4% Polyvinyl alcohol (such as a mixture of $\frac{1}{3}$ Airvol 103 and $\frac{2}{3}$ of Airvol 125), 1 to 10%, optionally 5% Polyvinyl acetate (Airflex 410), 10 to 20% optionally 16.4% Polyethylenimine (Lupasol F WF from BASF); about 1% Cross-linking agent CX-100, about 0.9-1% Surfactant and defoamer Surfynol 104H and 50 to 70%, optionally 60.3% Water.

The composite material of the invention is light weight and flexible, which does not significantly affect body movement. The breathable membrane 101 may be the membrane element of one of the moisture barriers sold under the trade mark STEDAIR PREVENT, STEDAIR GOLD or STEDAIR 3000 by Stedair, Inc..

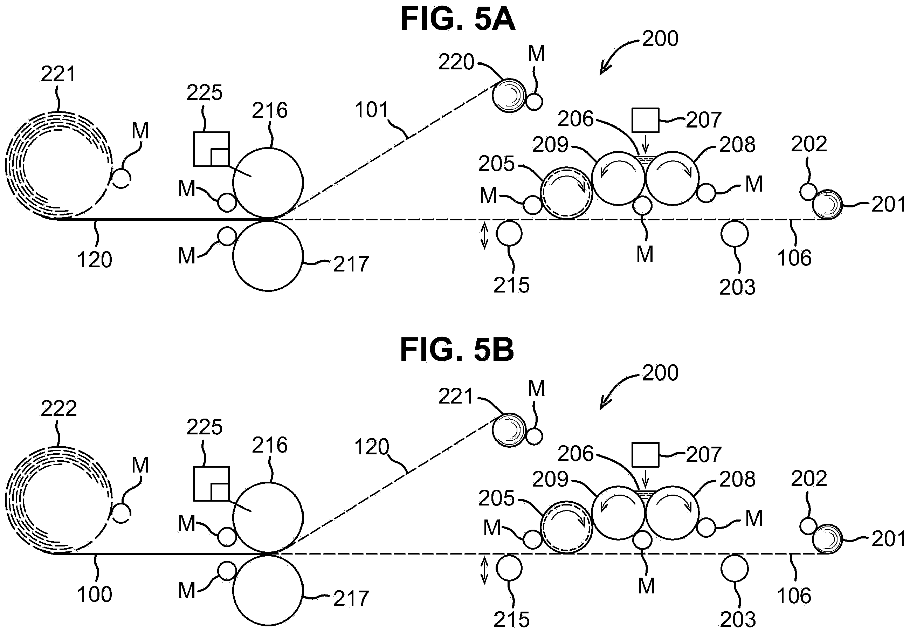

Referring to Figure 5A, there is shown an apparatus used in the manufacture of the composite fabric 100, the apparatus generally identified by reference numeral 200. The apparatus 200 comprises a roll 201 of fabric 106. A tensioner or drive roller 202 may be used to control the speed of rollout and/or tension in the fabric 106 which may inhibit wrinkling. The fabric 106 may pass over a guide roller 203 and under an engraved roller 205. The engraved roller 205 is coated with a hotmelt polyurethane 206. The hotmelt polyurethane is stored in a 200litre drum 207. The hotmelt polyurethane is highly viscous at room temperature. The hotmelt polyurethane is heated and flows from the drum 207 into a sump formed in a nip between adjacent rollers 208, 209. Roller 208 rotates in a clockwise direction and roller 209 rotates in an anticlockwise direction. Roller 208 picks up a thin layer of polyurethane from the sump and passes it on to coat the engraved roller 205 rotating anticlockwise. Any or all of the rollers 208, 209 and engraved roller 205 may be driven by a motor M.

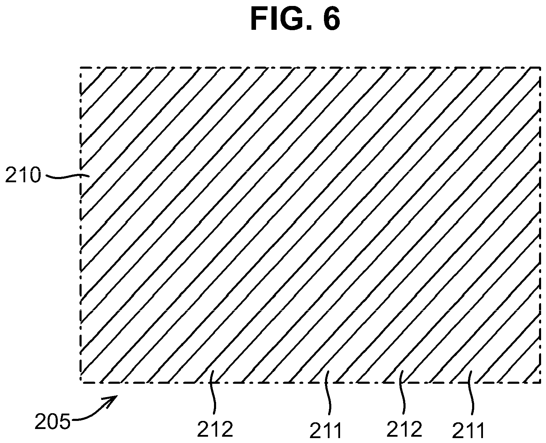

The engraved roller may have any suitable relief pattern engraved thereon, such as the pattern 210 shown in Figure 6. This pattern comprises a series of ridges 211 and valleys 212 which run parallel to each other and may be arranged radially to apply the hotmelt polyurethane 206 is continuous lines which run in the direction of travel of the fabric 106 through the apparatus. Alternatively, the series of parallel ridges 211 and valley 212 may be arranged at an angle to the direction of travel of the fabric 106 through the apparatus to apply discontinuous lines of hotmelt polyurethane to the fabric 106. The ridges 211 may be spaced 1 to 2mm apart to provide a valley 212 of width 1-2mm across. The width of each ridge top may be approximately 1mm.

Any or all of the rollers 208, 209 and engraved roller 205 may be heated to maintain the polyurethane at a desired application temperature, which may be between 100 and 180 degrees Celsius and preferably between 110 and 130 degrees Celsius.

The hotmelt polyurethane 206 may be a moisture curing hotmelt polyurethane adhesive with a temperature resistance of between -30 and 130 degrees Celsius and an application temperature of 120 degrees Celsius. The hotmelt polyurethane 106 may be applied at a rate of between 6 and 30 grams per square metre and optionally 10g per square metre. Initial cure time may be in the order of 30 minutes.

The engraved roller 205 applies the hotmelt polyurethane 206 to the fabric 106 in thin lines. The fabric may pass over a further roller 215 and into a nip between rollers 216 and 217. Either or both of rollers 216, 217 may be driven or tensioned by a respective motor M. A roll 220 of breathable membrane 101 passes into the nip between the rollers 216, 217 over the hotmelt polyurethane applied to the fabric 106, laminating the breathable membrane 101 to the fabric 106. The laminated fabric 120 is wound on to roll 221. The roll 221 may be driven or tensioned by a motor M.

A computer controller 225 is used to control the speed and tension in the rolls and rollers 201, 221, 208, 209, 205, 216, 217 of the apparatus 200.

When desired, the apparatus 200 is shut down and roll 220 is removed and left for the hotmelt polyurethane to cure which may be for between one hour and several days, and may be 48 hours. Roll 221 removed and placed where roll 220 was and unfurled to the nip between rollers 216 and 217, as shown in Figure 5B. The apparatus 200 is set running to apply the laminated fabric 120 to the hotmelt glue applied to fabric 106, as described above with reference to Figure 5A, to make a composite fabric 100 of the invention, which is wound on to roll 222. With correct machine settings up to 70% open area possible for breathability, so the composite fabric 100 maintains most of its breathability. Technique relays may be used on geometry of fabrics to remove adhesive where it touches.

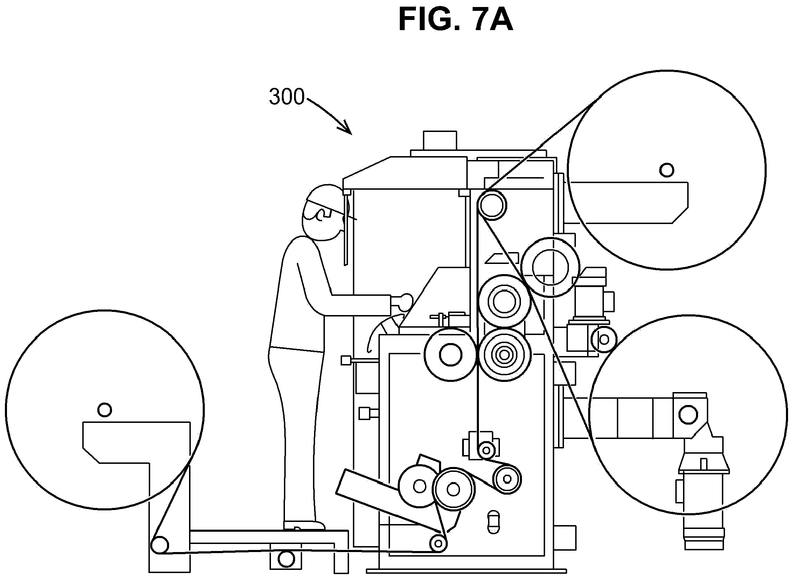

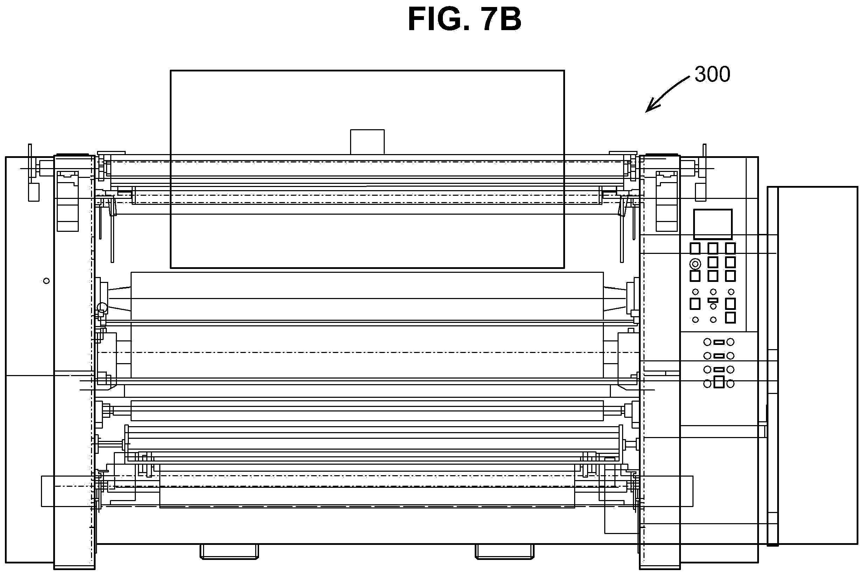

Figures 7A and 7B there is shown a further alternative apparatus used in the manufacture of the composite fabric 100, the apparatus generally identified by reference numeral 300. The apparatus 300 is generally similar to the apparatus 200, utilizing a similar arrangement of rollers, but within an upright apparatus. The apparatus may also comprise a doctor blade to facilitate spreading the hotmelt polyurethane after application using the engraved roller and before the fabric 106 enters the nip to apply the breathable membrane 101. The apparatus 300 may comprise a close couple 3 roller configuration steel-steel-steel, with unwinds with tension control, laps rolls, tension sensing winder with an engraved roller, form Trihelical 3 start multi helix depth 100 micron approximately and 28 mesh. Design weight 10-20 gam.

**Claims**

1. A base layer comprising or made from a composite fabric comprising a breathable membrane layer (101) having a multiplicity of micropores, the breathable membrane having an inner and outer surfaces, and an inner fabric layer (102) laminated to said inner surface of said breathable membrane and an outer fabric layer (103) laminated to said outer surface of said breathable membrane, the base layer for use in hazardous environments, such as smoky environments.

2. A base layer as claimed in Claim 1, wherein the inner fabric material comprises a woven yarn comprising polyester filaments, optionally, the polyester filaments are discontinuous and may be short polyester fibres and optionally, the yarn or filaments are coated in a fire-retardant coating.

3. A base layer as claimed in Claim 1 or 2, wherein the outer layer comprises a woven yarn comprising polyester filaments, optionally, the polyester filaments are discontinuous and may be short polyester fibres and optionally, the yarn or filaments are coated in a fire-retardant coating.

4. A base layer as claimed in Claim 1, 2 or 3, wherein the breathable membrane layer is a sheet material with said micropores formed therein.

5. A base layer as claimed in any of Claims 1 to 4, wherein said an inner fabric layer (102) is laminated to said inner surface of said breathable membrane with an adhesive, such as a hot melt polyurethane glue and an outer fabric layer (103) laminated to said outer surface of said breathable membrane with an adhesive, such as a hot melt polyurethane glue.

6. A base layer as claimed in Claim 5, wherein said breathable membrane layer comprises at least one of: a polymer; PolyTetraFluroEthylene (PTFE); or expanded PolyTetraFluroEthylene (ePTFE).

7. A base layer as claimed in Claim 5 or 6, wherein said breathable membrane layer is between 10 and $50\mu$ (0.01-0.05mm) and may be between 20 and $30\mu$ (0.02-0.03mm) and may be $25\mu$ (0.025mm).

8. A base layer as claimed in Claim 5, 6 or 7, wherein said breathable membrane layer has a water vapour transmissibility of between 100 and 1000 ($g/m^2/24hr$) and may be of between 400 and 800 ($g/m^2/24hr$) and may be of between 500 and 650 ($g/m^2/24hr$.

9. A base layer as claimed in any of Claims 5 to 8, wherein said breathable membrane layer has a 25% elongation when subjected to between 0.3 and 1 N/cm optionally between 0.5 and 0.8 N/cm and optionally 0.6 to 0.7 N/cm.

10. A base layer as claimed in any of Claims 5 to 9, wherein said breathable membrane layer has a tensile strength of between 2 and 6 (N/cm), optionally 3 to 5 (N/cm) and optionally, 3.5 to 4 (N/cm).

11. A base layer as claimed in any of Claims 1 to 10, further comprising stitching with fire resistant thread and may further comprising elasticated portions, optionally about a waist portion and optionally about an ankle portion and optionally about a neck portion.

12. An outer garment, such as a jacket, balaclava or fire-hood for use in smoky environments, the outer garment comprising or lined with a composite fabric comprising a breathable membrane layer having a multiplicity of pores and a breathable fire-retardant fabric layer having a multiplicity of openings, the breathable membrane layer laminated on at least one side to the breathable fire-retardant fabric layer with an adhesive.

13. A composite fabric of the base layer as claimed in any of Claims 1 to 12.

14. A method of making a composite fabric for use as a garment, the method comprising the steps of unfurling a breathable fire-retardant fabric from a roll of breathable fire-retardant fabric, applying with an engraved roller an amount of adhesive to the fire-retardant fabric, unfurling a breathable membrane from a roll of breathable membrane and passing the fire-retardant fabric with adhesive thereon and breathable membrane through a nip between two rollers to laminate the fire-retardant fabric and breathable membrane to form a composite fabric.

15. A base layer for use in smoky environments, the base layer comprising a composite fabric comprising a breathable membrane layer having a multiplicity of pores and a breathable fire-retardant fabric layer having a multiplicity of openings, the breathable membrane layer laminated on at least one side to the breathable fire-retardant fabric layer with an adhesive.

# FIG. 1

# FIG. 1A

# FIG. 1B

**FIG. 1C**

**FIG. 2**

# FIG. 3A

# FIG. 3B

# FIG. 3C

103  110  101  108  109  107

# FIG. 3D

FIG. 3E

# FIG. 4

101

101ᴵ

# FIG. 4A

147

AMBIENT AIR

1

146   145   145

103

105

101                                        101ᴵ

104

102

142        142        140

141        143

**FIG. 5A**

**FIG. 5B**

# FIG. 6

# FIG. 7A

300

EP 4 166 315 A1

FIG. 7B

300

Europäisches
Patentamt

European
Patent Office

Office européen
des brevets

# EUROPEAN SEARCH REPORT

Application Number

EP 22 19 5925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/288798 A1 (ATALLAH TOUFIC G [US]) 17 September 2020 (2020-09-17) * paragraphs [0003], [0004], [0055], [0057], [0066], [0072], [0073], [0079], [0080]; figure 3c * ----- | 1-15 | INV. B32B5/02 B32B5/18 B32B5/24 B32B7/12 A62B17/00 |
| X | WO 01/02163 A2 (R H WYNER ASSOCIATES INC [US]; WYNER DANIEL M [US] ET AL.) 11 January 2001 (2001-01-11) * page 1 * * page 5 – page 6; figures 1,3 * ----- | 1-15 | |
| A | US 2020/009409 A1 (CROTTY LEO J [US] ET AL) 9 January 2020 (2020-01-09) * paragraphs [0002], [0003], [0006], [0028] – [0043] * ----- | 1-15 | |

TECHNICAL FIELDS
SEARCHED        (IPC)

B32B
A62C
A62B

The present search report has been drawn up for all claims

| Place of search | Date of completion of the search | Examiner |
|---|---|---|
| The Hague | 9 February 2023 | Aspeby, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5925

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | Publication date |
|---|---|---|---|---|---|
| US 2020288798 | A1 | 17-09-2020 | NONE | | |
| WO 0102163 | A2 | 11-01-2001 | AU | 5896600 A | 22-01-2001 |
| | | | CA | 2376270 A1 | 11-01-2001 |
| | | | MX | PA02000074 A | 02-07-2002 |
| | | | US | 6531419 B1 | 11-03-2003 |
| | | | US | 2003082971 A1 | 01-05-2003 |
| | | | WO | 0102163 A2 | 11-01-2001 |
| US 2020009409 | A1 | 09-01-2020 | NONE | | |

EPO FORM P0459

For more details about this annex : see Official Journal of the European Patent Office, No. 12/82